# EUROPÄISCHE PATENTSCHRIFT

(11) **EP 1 646 162 B1**
(45) Veröffentlichungstag und Bekanntmachung des Hinweises auf die Patenterteilung: **13.02.2013**
(21) Anmeldenummer: 05107134.8
(22) Anmeldetag: 02.08.2005
(51) Int. Cl.: H04B 7/08

(54) **Verfahren zum mobilen Empfangen eines, insbesondere frequenzmodulierten, Funksignals und Funkempfänger-Schaltung hierfür**
Method and radio circuit for mobile receiving a radio signal, in particular a frequency modulated signal
Procédé et circuit pour la réception mobile d'un signal radio, en particulier d'un signal radio module en fréquence

(30) Priorität: 17.09.2004 DE 102004045109
(43) Veröffentlichungstag der Anmeldung: 12.04.2006
(73) Patentinhaber: Robert Bosch GmbH, 70442 Stuttgart (DE)
(72) Erfinder: Kottschlag, Gerhard, 31139, Hildesheim (DE); Jandel, Peter, 31139, Hildesheim (DE); Passoke, Jens, 30539, Hannover (DE)

(56) Entgegenhaltungen:
- EP-A- 0 199 058
- EP-A- 0 504 737
- US-A- 5 335 010
- US-A1- 2001 016 478
- US-A1- 2004 142 669
- US-B1- 6 452 557

## Beschreibung

### Technisches Gebiet

Die Erfindung betrifft ein Verfahren zum mobilen Empfangen eines Funksignals nach dem Oberbegriff des Anspruches 1 und eine Funkempfänger-Schaltung nach dem Oberbegriff des Anspruches 6. Weiterhin betrifft die Erfindung ein Kfz-Radio nach Anspruch 7.

### Stand der Technik

In Fahrzeugen werden mobile Frequenzmodulations-Rundfunkempfänger eingesetzt. Der mobile Empfang kann durch verschiedene Größen und Einflüsse gestört werden. Eines dieser Störungen ist der Abschattungseffekt. Dieser entsteht dadurch, dass der Empfang beispielsweise durch ein Gebäude oder dergleichen stark gedämpft werden kann. Eine an dem Empfänger angeschlossene Antenne kann das Rundfunksignal daher nur schwach empfangen.

Eine andere Störung kann infolge der Mehrwegeausbreitung eines Rundfunksignals bzw. durch den Mehrwegempfang erfolgen. Hierbei treffen durch zum Beispiel ein oder mehrere Gebäude oder anderer Bebauung oder Naturgegebenheiten, wie Berge oder ähnliches, reflektierte Signale mit unterschiedlichen Wegen auf die Antenne. Die elektromagnetischen Wellen zweier oder mehrerer Richtungen können sich so überlagern, dass es an der Empfangsantenne in Abhängigkeit der unterschiedlichen Phasenlage zu einer starken Reduktion der Feldstärke bis hin zur Auslöschung des Empfangssignals kommt.

In der Praxis führen diese Effekte zu einer erheblichen Beeinträchtigung der Empfangsqualität.

Bekannt ist es, aus dem Kraftfahrzeugbereich sogenannte Diversity Systeme einzusetzen. Diese liefern eine hohe Empfangsqualität. Bei derartigen Systemen sind mehrere Antennen vorhanden. Zwischen den Antennen wird diejenige für einen Empfang ausgewählt, die das beste Funksignal liefert.

Zur Auswahl der besten Antenne werden Detektoren eingesetzt, die die Empfangsqualität des an einem Antenneneingang anliegenden Signals bewertet. Wenn die Empfangsqualität der geschalteten Antenne einen Wert unterschreitet, wird in elektronischer Weise auf eine alternative Antenne umgeschaltet. Dieses Signal wird erneut bewertet. Dies wird fortgesetzt bis zum Beispiel die optimalste Antenne gefunden worden ist.

Zwar wird die Empfangsqualität durch derartige Systeme verbessert, es werden jedoch, um ein zufriedenstellendes Ergebnis zu erreichen, mehr als nur zwei Antennen verwendet. Beispielsweise werden vier Antennen benutzt. Für jede Antenne muss weiterhin ein Antennenabgriff geschaffen werden bzw. jede Antenne muss mit einer Umschalteinheit verbunden werden, was einen erheblichen Aufwand bedeutet.

Aus der US-B1-6452557 ist ein Verfahren zum mobilen Empfangen eines Funksignals mit zwei Antennen bekannt. Über eine Combiner-Stufe werden dort zwei zueinander orthogonale Signale gebildet, wobei eine Phasenverschiebung der Signale vorgenommen wird.

Bei der US 2004/0142669 A1 werden zwei Antennensignale zum Empfänger geschaltet. Nur im Falle des Unterschreitens einer Schwelle wird aus den beiden Antennensignalen ein Summensignal generiert.

### Darstellung der Erfindung, Aufgabe, Lösung, Vorteile

Der Erfindung liegt die Aufgabe zugrunde, ein Verfahren zum mobilen Empfangen eines frequenzmodulierten Funksignals nach dem Oberbegriff des Anspruches 1 sowie eine Funkempfänger-Schaltung hierfür zu schaffen, die in einfacher Weise und mit wenig Montage- und Schaltungsaufwand eine Verbesserung der Empfangsqualität schafft.

Diese Aufgabe wird durch die kennzeichnenden Merkmale des Anspruches 1 in Verbindung mit seinen Oberbegriffsmerkmalen bzw. durch die kennzeichnenden Merkmale des Anspruches 8 in Verbindung mit seinen Oberbegriffsmerkmalen gelöst.

Der Erfindung liegt der Gedanke zugrunde, anstatt einer Vielzahl von Antennen zu benutzen, einfach weitere Antennensignale dadurch zu schaffen, dass diese durch eine phasenverschobene Überlagerung realer Antennensignale gebildet werden. Die so neu gebildeten Antennensignale, sind praktisch virtuellen Antennen zugeordnet. Diese virtuellen Antennen besitzen Richtcharakteristiken, die von denen der realen Antennen abweichen.

Somit ist es möglich, bereits mit nur zwei realen Antennen drei, vier oder eine Vielzahl von Antennensignale zu benutzten, um eines davon auswählen zu können, das eine gute Empfangsqualität liefert.

Bevorzugterweise werden zwei reale Antennen eingesetzt. Möglich ist aber eine höhere Anzahl, wobei grundsätzlich auch Summensignale von drei oder mehr phasenverschobenen Signalen gebildet werden können und/oder zusätzlich mindestens ein weiteres Signal einer realen (zum Beispiel dritten) Antenne eingesetzt werden kann. Die Zahl der genutzten Antennensignale sowie auch die Zahl der durch Überlagerung bzw. Phasenverschiebung und anschließender Addition erzeugten Signale kann dabei prinzipiell beliebig gewählt werden.

Durch das erfindungsgemäße Verfahren bzw. mit der erfindungsgemäßen Schaltung kann der für die Realisierung erforderliche Aufwand, insbesondere die Zahl der Antennen und deren Zuleitungen zum Empfänger bzw. zu einer entsprechenden Umschaltbox reduziert werden. Ebenso kann z. B. die gesamte elektronische Schaltung z. B. für ein 4fach Diversity in dem Empfänger integriert werden, wobei nur zwei HF-Leitungen von den Antennen benötigt werden. Somit besteht die Möglichkeit einer Lösung, bei der keine Schaltinformation zu einer Antennenstruktur z. B. auf einer Fahrzeugscheibe geführt werden muss.

Eine Addition der beiden realen Antennensignale bedeutet nämlich je nach Phasenlage der einzelnen Signale, einerseits einen Gewinn an Signalpegel, andererseits kann so eine synthetische Antenne erzeugt werden, deren Richtdiagramm von den physikalischen Antennen abweicht und durch Phase und Verstärkung variiert werden kann. Ein so geschaffenes Diversity-System kann nun ebenfalls zwischen mehr als nur zwei Signalen wählen, die aus den zwei realen Antennen erzeugt werden.

In einer vorteilhaften Weiterbildung des erfindungsgemäßen Verfahrens ist vorgesehen, dass eine Umschaltung zwischen nicht addierten Antennensignalen und mindestens einem addierten Antennensignal erfolgt, wobei bei den nicht addierten Signalen die Antennensignale direkt genutzt werden. Dadurch wird die Zahl von Summierstufen reduziert, da für eine direkte Benutzung der realen Antennen keine Summierstufen nötig sind. Die realen Antennen können über eine interne Verdrahtung sowohl direkt an einem Umschalter angeschlossen werden als auch indirekt über eine oder mehrere Summierstufen.

Eine bevorzugte praktische Umsetzung besteht darin, dass mindestens eine Summierstufe wenigstens ein Summensignal aus zwei Antennensignalen erzeugt, wobei die Summierstufe bevorzugt aus einem Hochfrequenz-Combiner besteht. Mit einer solchen Hochfrequenz-Combiner-Lösung lassen sich Phasenverschiebungen leicht erzeugen. Hierzu weist der Hochfrequenz-Combiner mindestens eine erste und mindestens eine zweite Wicklung auf.

Bei dieser Lösung sind die Antennensignale einzeln an jeweils eine Wicklung des Hochfrequenz-Combiners durch zwei Schaltelemente zuschaltbar. Es kann also zum Beispiel nur die erste reale Antenne direkt über die erste Wicklung zugeschaltet werden, oder nur die zweite reale Antenne über die zweite Wicklung zugeschaltet werden, oder es können beide reale Antennen zugeschaltet werden, deren Signale addiert werden.

Der Empfänger ist dann mit dem Hochfrequenz-Combiner an jeweils einem von zwei Wicklungsenden der ersten Wicklung über ein weiteres Schaltelement umschaltbar. Dadurch kann eine Verschiebung eines der Antennensignale um 180° erfolgen, so dass durch die Umschaltung zwei unterschiedliche, künstliche Antennensignale zum Empfänger gelangen.

Zweckmäßigerweise ist eines der Schaltelemente mit einem Mittelabgriff des Hochfrequenz-Combiners bzw. der ersten Wicklung elektrisch verbunden. Bei entsprechender Wicklungsanpassung kann eine echte Addition der Antennensignale entstehen, da Ströme in einer Wicklung einen (ggf. um 180° versetzten) Strom in der anderen Wicklung verursachen.

Bevorzugterweise ist vorgesehen, dass jedes Schaltelement über den Empfänger gesteuert wird. Nach einer vorteilhaften Ausführungsform ist vorgesehen, dass bei der Funkempfänger-Schaltung jede Summierstufe mit mehreren Antennen direkt verbunden und/oder über wenigstens einen Teil von mehreren Schaltelemente elektrisch verbindbar ist, wobei jede Summierstufe wahlweise über einen Umschalter mit einem Empfangseingang des Funkempfängers verbunden werden kann. Vorteilhafterweise ist mindestens eine Summierstufe über den Funkempfänger derart ansteuerbar ausgebildet, dass eine Phasenlage einstellbar ist.

Weitere vorteilhafte Weiterbildungen der Erfindung sind in den Unteransprüchen gekennzeichnet.

### Kurze Beschreibung der Zeichnung

Ein Ausführungsbeispiel der Erfindung wird anhand der Zeichnungen näher erläutert.

Es zeigt:
Fig. 1 ein erste erfindungsgemäße Ausführungsform einer Empfangsschaltung mit zwei Antennen und drei Summierstufen, so dass insgesamt fünf Antennensignale vorhanden sind,
Fig. 2 eine weitere Schaltung mit zwei Antennen und nur einer Summierstufen, bei der jedoch eine Phasenverschiebung umschaltbar ist, so dass insgesamt vier Antennensignale vorhanden sind, und
Fig. 3 eine konkrete schaltungstechnische Realisierung einer Empfangsschaltung mit einer als Hochfrequenz-Combiner ausgeführten Summierstufe.

### Bester Weg zur Ausführung der Erfindung

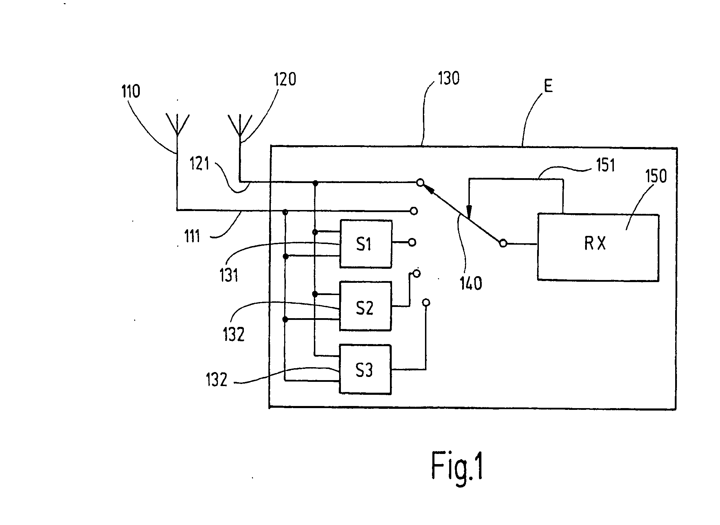

Fig. 1 zeigt ein erstes Beispiel einer erfindungsgemäßen Empfangsschaltung E bzw. einem Empfangsgerät 130. Diese umfasst drei Summierstufen S1, S2, S3, einen Empfänger 150 und einen Umschalter 140. Zwei Antennen 110 und 120 sind an dem Empfangsgerät 130 über zwei Leitungen 121 und 111 anschließbar. Das Empfangsgerät 130 betätigt in bekannter Weise ein Schaltelement bzw. einen Umschalter 140, um unterschiedliche Funksignale einem Eingang des Empfängers 150 zuzuführen.

Jeder Eingang 131, 132, 133 der Summierstufe S1, S2, S3 ist mit beiden Antennen 120, 121 verbunden. Sowohl die Ausgänge der Summierstufen S1, S2, S3 als auch die Antennen 110, 120 sind mit dem Umschalter verbunden, der wiederum an dem Empfangseingang des Empfängers 150 geschaltet ist. Die Ausgänge der Summierstufen sind mit zusätzlichen Abgriffen des Umschalters 140 verbunden.

Der Empfänger 150 kann über ein Steuersignal bzw. eine Steuerverbindung 151 sowohl die Antennen direkt als auch die Summensignale der Summierstufen schalten. Dadurch steht eine größere Auswahl unterschiedlicher Signale zur Verfügung. Der Empfänger wählt das Signal mit der höchsten Qualität aus.

Die Summierstufen S1, S2, S3 erzeugen Summensignale unterschiedlicher Phasenbeziehung phi1, phi2, phi3.

Es werden hier jeweils zwei phasenverschobene Antennensignale addiert, um drei weitere Antennensignale zu bilden.

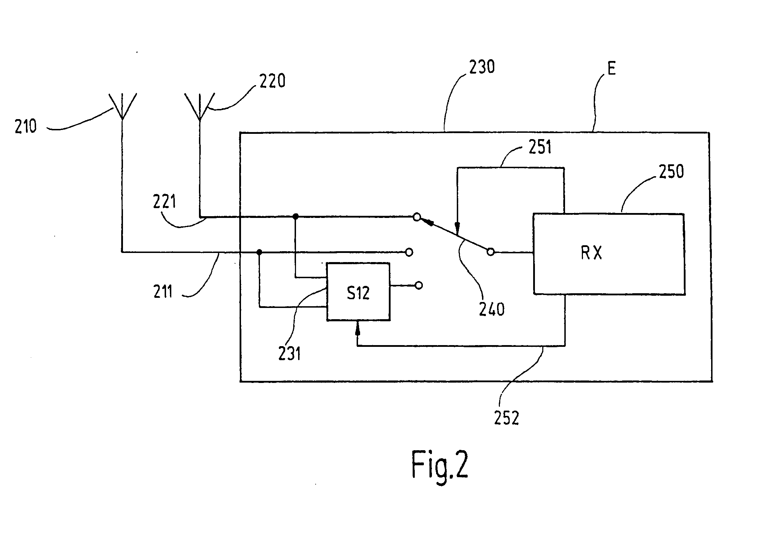

Ein weiteres Beispiel zeigt Fig. 2. Hier sind zwei Antennen 210, 220 bzw. Antennenleitungen 221, 211 und nur eine Summierstufe S12 vorhanden. Diese Summierstufe kann Summiersignale mit zwei Phasenbeziehungen phi1, phi2 erzeugen. Die Auswahl der gewünschten Phasenlage erfolgt durch einen Empfänger 250 über eine zusätzliche Steuerleitung 252, die ein zusätzliches (zweites) Steuersignal erzeugt.

Einerseits können die Antennen direkt geschaltet werden, was zwei unterschiedliche Signale ergibt, andererseits erzeugt die Summierstufe S 12 zwei weitere Signale, so dass insgesamt vier Antennensignale ausgewählt werden können.

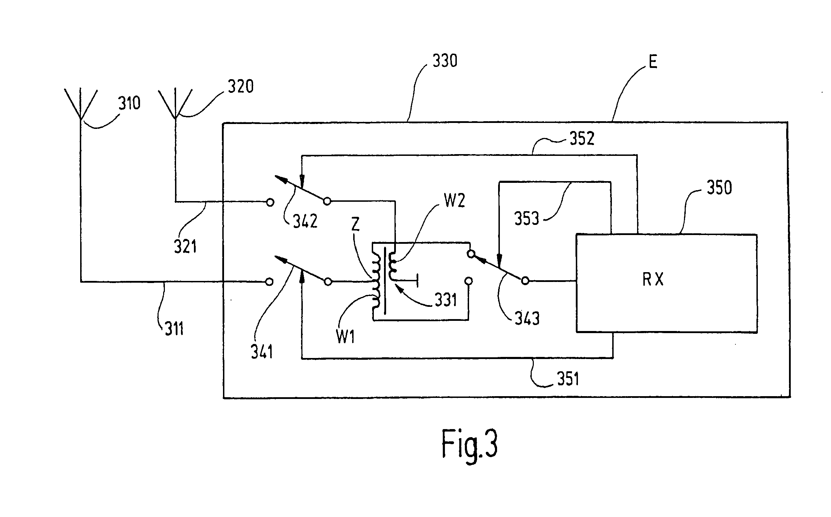

In Fig. 3 ist eine Ausführungsbeispiel mit einer konkreten Summierschaltung veranschaulicht.

Das Empfangsgerät 330 weist eine einzige Summierstufe 331 auf. Diese ist als Hochfrequenztransformator mit einer Primär- und einer Sekundärwicklung W1, W2 ausgeführt. Eine erste Antenne 310 und eine zweite Antenne 320 sind an dem Empfangsgerät 330 angeschlossen.

Die erste Antenne 310 ist über ein erstes Schaltelement 341 mit einem Zusatzabgriff Z der ersten Wicklung W 1 (Primärwicklung) verbunden.

Die zweite Antenne 320 ist an ein weiteres Schaltelement 342 angeschlossen, welches an einem Wicklungsende der zweiten Wicklung W2 (Sekundärwicklung) verbunden ist. Das andere Ende der zweiten Wicklung W2 ist an Masse angeschlossen.

Die beiden Enden der ersten Wicklung W1 sind mit einem Umschalter 343 elektrisch verbunden. Dieser ist an dem Empfänger 350 anschlossen.

Weiterhin ist der Empfänger 350 über drei Steuersignale führende Steuerleitungen 351, 352 und 353 mit allen Schaltern 341, 342, 343 verbunden. Somit kann der Empfänger 350 alle Schaltelemente betätigen.

Die Summierstufe 331, die auch als ein sogenannter Hochfrequenz-Combiner bezeichnet ist, erzeugt Summensignale mit zwei Phasenbeziehungen, und zwar phi=0° und phi=180°.

Wenn beispielsweise das erste Schaltelement 341 geschlossen und das zweite Schaltelement 342 geöffnet ist, gelangt nur das Signal der Leitung 311 der ersten Antenne 310 an den Summierer bzw. die Summierstufe 331. Das Antennensignal wird über den Umschalter 343 und den Empfangseingang an den Empfänger 350 weitergeleitet.

Wenn das erste Schaltelement 341 geöffnet und der zweite Schalter 342 geschlossen ist, gelangt hingegen nur das Signal der Leitung 321 an die Sekundärwicklung W2 des Summierers 331 weiter an beide Eingangskontakte bzw. Eingänge des Schaltelementes 343 und somit an den Eingang des Empfängers 350.

Erst wenn beide Schaltelemente 341 und 342 geschlossen sind, gelangen beide Signale der Leitungen 311, 321 an dem Summierer 331. In der Summierstufe 331 entstehen zwei neue Signale mit unterschiedlichen Phasenbeziehungen, nämlich die Summe (=0°) und die Summe bzw. Differenz (=180°) der Eingangssignale. Diese beiden resultierenden Signale werden an die Eingangskontakte des Schaltelementes 343 geführt, so dass der Empfänger über sein Steuersignal (Leitung 353) eines dieser zwei Signale auswählen kann.

Sechs mögliche Schalterkombinationen sind möglich, und zwar:
1) erster Schalter 341=1,zweiter Schalter 342=0,Umschalter 343= oben
2) erster Schalter 341=0, zweiter Schalter 342=1, Umschalter 343=oben
3) erster Schalter 341=1,zweiter Schalter 342=1,Umschalter 343 =oben
4) erster Schalter 341=1,zweiter Schalter 342=0,Umschalter 343= unten
5) erster Schalter 341=0,zweiter Schalter 342=1, Umschalter 343=unten
6) erster Schalter 341=1,zweiter Schalter 342=1,Umschalter 343 =unten

Bei 1), 2), 4), 5) ist jeweils nur eine der beiden realen Antennen 310, 320 mit dem Empfänger 350 verbunden.

Bei 3) und 6) sind zwei Signale von zwei virtuelle Antennen vorhanden.

Insgesamt sind vier verwertbare Antennensignale vorhanden.

Zur Auswahl der besten Antenne können Detektoren, wie eingangs erläutert, eingesetzt werden.

Die beschriebenen Schaltelemente können sowohl mechanische als auch elektrische Schaltelemente sein, beispielsweise Halbleiterschaltelemente. Der Hochfrequenz-Combiner kann auch in anderen Ausführungen, z. B. als kapazitiver Combiner eingesetzt werden. Ebenso kann er als reziprokes Element entsprechend anders beschaltet werden. Hierzu werden die beiden Antennensignale 310, 320 den Endanschlüssen der Primärwicklung zugeführt, und das Summen- bzw. Differenzsignal am Mittelabgriff der ersten Wicklung W1 und an der zweiten Wicklung W2 abgenommen.

## Patentansprüche

1. Verfahren zum mobilen Empfangen eines Funksignals mittels eines Empfängers (150, 250, 350) durch mehr als eine Antenne (110, 120; 210, 220; 310, 320), so dass ein ausgesuchtes Antennensignal dem Empfänger (150, 250, 350) zugeführt wird, um eine Empfangsqualität zu optimieren,
- wobei zwei oder mehrere phasenverschobene Antennensignale addiert werden, um mindestens ein weiteres Antennensignal zu bilden, das dem Empfänger (150, 250, 350) zuführbar ist,
- wobei mindestens eine Summierstufe mehrere Summensignale aus zwei Antennensignalen (321, 311), erzeugt wobei die Summierstufe aus einem Hochfrequenz-Combiner besteht, **dadurch gekennzeichnet, dass**
- der Hochfrequenz-Combiner mindestens eine erste und mindestens eine zweite Wicklung (W1, W2) aufweist, wobei die Antennensignale einzein an der ersten Wicklung (W1) und der zweiten Wicklung (W2) des HochfrequenzCombiners durch ein erstes und zweites Schaltelement (341, 342) zuschaltbar sind und der Empfänger (350) mit dem Hochfrequenz-Combiner an jeweils einem von zwei Wicklungsenden der zweiten Wicklung (W2) über ein weiteres Schaltelement (343) umschaltbar ist.

2. Verfahren nach Anspruch 1, **dadurch gekennzeichnet, dass** jeweils zwei phasenverschobene Antennensignale addiert werden, um jeweils ein weiteres Antennensignal zu bilden, das dem Empfänger (150, 250, 350) zuführbar ist.

3. Verfahren nach Anspruch 1 oder 2, **dadurch gekennzeichnet, dass** eine Umschaltung zwischen nicht addierten Antennensignalen und mindestens einem addierten Antennensignal erfolgt, wobei bei den nicht addierten Signalen die Antennensignale direkt genutzt werden.

4. Verfahren nach Anspruch 1, **dadurch gekennzeichnet, dass** eine Antennensignal-Auswahl dadurch erfolgt, dass mindestens eines der Schaltelemente mit einem Zusatzabgriff (Z) des Hochfrequenzcombiners, bezüglich einer seiner Wicklungen (W1), elektrisch verbunden ist.

5. Verfahren nach Anspruch 4, **dadurch gekennzeichnet, dass** eine Antennensignal-Auswahl mit zwei Antennen (310, 320) dadurch erfolgt, dass eine erste Antenne (310) über ein erstes Schaltelement (342) verbunden ist, welches mit dem Zusatzabgriff der ersten Wicklung (W1) verbunden ist, dass die zweite Antenne (320) über das zweite Schaltelement (342) an einem Wicklungsende der zweiten Wicklung (W2) verbunden ist, wobei das andere Ende der zweiten Wicklung (W2) an Masse geschaltet ist und dass die beiden Enden der ersten Wicklung (W1) mit einem Umschalter (343) elektrisch verbunden sind, der an dem Empfänger (350) angeschlossen ist.

6. Funkempfänger-Schaltung für ein Diversity-System mit Mitteln zur Durchführung der Schritte des Verfahrens nach einem der vorhergehenden Ansprüche mit einem Empfänger (150; 250; 350), an der mehr als einer Antenne (110, 120; 210, 220; 310, 320) anschließbar ist, und mindestens einem Schaltelement (140, 240; 341, 342, 343) zum wahlweise Zuführen eines ausgesuchten Antennensignals einer der Antennen (110, 120; 210, 220; 310, 320) an den Empfänger (150, 250, 350), und mindestens eine Summierstufe (S1, S12, 331) zur Erzeugung mehrerer Summensignale aus zwei Antennensignalen (321, 311), wobei die Summierstufe aus einem Hochfrequenz- Combiner besteht, **dadurch gekennzeichnet, dass** der Hochfrequenz - Combiner mindestens eine erste und mindestens eine zweite Wicklung (W1, W2) aufweist, wobei die Antennen signale einzeln an der ersten Wicklung (W1) und der zweiten Wicklung (W2) des Hoch frequenz-Combiners durch ein erstes und zweites Schaltelement (341, 342) zuschaltbar sind und der Empfänger (350) mit dem Hochfrequenz-Combiner an jeweils einem von zwei Wicklungsenden der zweiten wicklung (W2) über ein weiteres Schaltelement (343) unschaltbar ist. .

7. Kfz-Radio mit einem Rundfunkempfänger mit einer Funkempfänger-Schaltung nach Anspruch 6.

8. Rundfunkempfänger nach Anspruch 7, **dadurch gekennzeichnet, dass** reziproke Bauteile in ihrer Anschlussrichtung entsprechend der Reziprozität verdreht sind.

## Claims

1. Method for the mobile reception of a radio signal by means of a receiver (150, 250, 350) using more than one antenna (110, 120; 210, 220; 310, 320), with the result that the selected antenna signal is supplied to the receiver (150, 250, 350) in order to optimize a reception quality,
- wherein two or more phase-shifted antenna signals are added in order to form at least one further antenna signal which can be supplied to the receiver (150, 250, 350),
- wherein at least one summing stage produces a plurality of summed signals from two antenna signals (321, 311), wherein the summing stage comprises a radio-frequency combiner, **characterized in that**
- the radio-frequency combiner has at least one first and at least one second winding (W1, W2), wherein the antenna signals can be individually connected to the first winding (W1) and to the second winding (W2) of the radio-frequency combiner by a first and a second switching element (341, 342), and the receiver (350) can be changed over between each of two winding ends of the second winding (W2) with the radio-frequency combiner by means of a further switching element (343).

2. Method according to Claim 1, **characterized in that** two respective phase-shifted antenna signals are added in order to form a respective further antenna signal which can be supplied to the receiver (150, 250, 350).

3. Method according to Claim 1 or 2, **characterized in that** a changeover is effected between unadded antenna signals and at least one added antenna signal, wherein the antenna signals are used directly in the case of the unadded signals.

4. Method according to Claim 1, **characterized in that** an antenna signal selection is made by virtue of at least one of the switching elements being electrically connected to a supplementary tap (Z) on the radio-frequency combiner, for one of the windings (W1) thereof.

5. Method according to Claim 4, **characterized in that** an antenna signal selection with two antennas (310, 320) is made by virtue of a first antenna (310) being connected via a first switching element (342), which is connected to the supplementary tap on the first winding (W1), by virtue of the second antenna (320) being connected via the second switching element (342) at a winding end of the second winding (W2), wherein the other end of the second winding (W2) is connected to earth, and by virtue of the two ends of the first winding (W1) being electrically connected to a changeover switch (343) which is connected to the receiver (350).

6. Radio receiver circuit for a diversity system having means for performing the steps of the method according to one of the preceding claims, having a receiver (150; 250; 350), to which more than one antenna (110, 120; 210, 220; 310, 320) can be connected, and at least one switching element (140, 240; 341, 342, 343) for selectively supplying a selected antenna signal from one of the antennas (110, 120; 210, 220; 310, 320) to the receiver (150, 250, 350), and at least one summing stage (S1, S12, 331) for producing a plurality of summed signals from two antenna signals (321, 331), wherein the summing stage comprises a radio-frequency combiner, **characterized in that** the radio-frequency combiner has at least one first and at least one second winding (W1, W2), wherein the antenna signals can be individually connected to the first winding (W1) and to the second winding (W2) of the radio-frequency combiner by a first and a second switching element (341, 342), and the receiver (350) can be changed over between each of two winding ends of the second winding (W2) with the radio-frequency combiner by means of a further switching element (343).

7. Motor vehicle radio having a broadcast radio receiver with a radio receiver circuit according to Claim 6.

8. Broadcast radio receiver according to Claim 7, **characterized in that** reciprocal components have their direction of connection rotated in accordance with the reciprocity.

## Revendications

1. Procédé de réception mobile d'un signal radioélectrique au moyen d'un récepteur (150, 250, 350) par plus d'une antenne (110, 120 ; 210, 220 ; 310, 320), de sorte qu'un signal d'antenne choisi soit acheminé au récepteur (150, 250, 350), en vue d'optimiser la qualité de réception,
- deux ou plusieurs signaux d'antenne déphasés étant additionnés pour former au moins un signal d'antenne supplémentaire qui peut être acheminé au récepteur (150, 250, 350),
- au moins un étage totalisateur générant plusieurs signaux totaux à partir de deux signaux d'antenne (321, 311), l'étage totalisateur se composant d'un combineur à haute fréquence, **caractérisé en ce que**
- le combineur à haute fréquence présente au moins un premier et au moins un deuxième enroulement (W1, W2), les signaux d'antenne pouvant être appliqués individuellement au premier enroulement (W1) et au deuxième enroulement (W2) du combineur à haute fréquence par un premier et un deuxième élément de commutation (341, 342) et le récepteur (350) pouvant être permuté avec le combineur à haute fréquence à chaque fois sur l'une des deux extrémités d'enroulement du deuxième enroulement (W2) par le biais d'un élément de commutation (343) supplémentaire.

2. Procédé selon la revendication 1, **caractérisé en ce que** deux signaux d'antenne déphasés sont à chaque fois additionnés pour former à chaque fois un signal d'antenne supplémentaire qui peut être acheminé au récepteur (150, 250, 350).

3. Procédé selon la revendication 1 ou 2, **caractérisé en ce qu'**une permutation entre les signaux d'antenne non additionnés et au moins un signal d'antenne additionné a lieu, les signaux d'antenne étant utilisés directement dans le cas des signaux non additionnés.

4. Procédé selon la revendication 1, **caractérisé en ce qu'**une sélection du signal d'antenne est effectuée **en ce qu'**au moins l'un des éléments de commutation est relié électriquement avec une prise supplémentaire (Z) du combineur à haute fréquence en rapport avec l'un de ses enroulements (W1).

5. Procédé selon la revendication 4, **caractérisé en ce qu'**une sélection du signal d'antenne est effectuée avec deux antennes (310, 320) **en ce qu'**une première antenne (310) est reliée par le biais d'un premier élément de commutation (342), lequel est relié avec la prise supplémentaire du premier enroulement (W1), **en ce que** la deuxième antenne (320) est reliée à une extrémité d'enroulement du deuxième enroulement (W2) par le biais du deuxième élément de commutation (342), l'autre extrémité du deuxième enroulement (W2) étant connecté à la masse et **en ce que** les deux extrémités du premier enroulement (W1) sont reliées électriquement avec un inverseur (343) qui est raccordé au récepteur (350).

6. Circuit récepteur radioélectrique pour un système en diversité comprenant des moyens pour exécuter les étapes du procédé selon l'une des revendications précédentes, comprenant un récepteur (150, 250, 350) auquel peut être raccordée plus d'une antenne (110, 120 ; 210, 220 ; 310, 320), et au moins un élément de commutation (140, 240 ; 341, 342, 343) pour acheminer de manière sélective un signal d'antenne choisi de l'une des antennes (110, 120 ; 210, 220 ; 310, 320) au récepteur (150, 250, 350), et au moins un étage totalisateur (S1, S12, 331) pour générer plusieurs signaux totaux à partir de deux signaux d'antenne (321, 311), l'étage totalisateur se composant d'un combineur à haute fréquence, **caractérisé en ce que** le combineur à haute fréquence présente au moins un premier et au moins un deuxième enroulement (W1, W2), les signaux d'antenne pouvant être appliqués individuellement au premier enroulement (W1) et au deuxième enroulement (W2) du combineur à haute fréquence par un premier et un deuxième élément de commutation (341, 342) et le récepteur (350) pouvant être permuté avec le combineur à haute fréquence à chaque fois sur l'une des deux extrémités d'enroulement du deuxième enroulement (W2) par le biais d'un élément de commutation (343) supplémentaire.

7. Autoradio équipé d'un récepteur de radiodiffusion comprenant un circuit récepteur radioélectrique selon la revendication 6.

8. Récepteur de radiodiffusion selon la revendication 7, **caractérisé en ce que** le sens de branchement des composants réciproques est tourné conformément à la réciprocité.
